# EUROPÄISCHE PATENTSCHRIFT

(11) **EP 2 332 490 B1**
(45) Veröffentlichungstag und Bekanntmachung des Hinweises auf die Patenterteilung: **11.10.2017**
(21) Anmeldenummer: 09178725.9
(22) Anmeldetag: 10.12.2009
(51) Int. Cl.: A61C 13/15, H01L 33/60

(54) **Lichthärtgerät für Dentalzwecke**
Light hardening device for dental purposes
Appareil de durcissement à la lumière à des fins dentaires

(43) Veröffentlichungstag der Anmeldung: 15.06.2011
(73) Patentinhaber: Ivoclar Vivadent AG, 9494 Schaan (LI)
(72) Erfinder: Bruno, Senn, 9470 Buchs (CH)
(74) Vertreter: Baronetzky, Klaus

(56) Entgegenhaltungen:
- EP-A1- 1 710 846
- US-A1- 2001 046 652
- US-A1- 2002 187 455
- US-A1- 2004 149 998
- US-A1- 2005 231 983
- US-B1- 6 692 250
- US-B2- 7 300 175

## Beschreibung

Die Erfindung betrifft eine Lichthärtgerät für Dentalzwecke, gemäß dem Oberbegriff von Anspruch 1.

Ein derartiges Lichthärtgerät ist beispielsweise aus der DE 101 04 579 A1 bekannt. Bei dieser Lösung sind auf einem gemeinsamen Kupfersubstrat Vertiefungen eingebracht in die Chips eingelassen sind, die der Lichtemission dienen sollen. Diese Lösung hat den Vorteil, dass auf Grund des massiven Kupfersubstrats alle Chips im Wesentlichen auf der gleichen Temperatur sind und auch eine gute Wärmeableitung sichergestellt ist. Die Lichtemission ist jedoch bei dieser Lösung verbesserungswürdig, was insbesondere an den recht kleinen Reflektoren liegt.

Um die Lichtemission zu verbessern, ist es vorgeschlagen worden, über derartigen Einzelreflektoren je Sammellinsen vorzusehen. Dennoch ist der Lichtwirkungsgrad nicht besonders hoch. Dies gilt auch für die aus den deutschen Patenten DE 101 25 341 B4 und DE 101 27 416 B4 bekannten Lösungen. Hier sind die Reflektoren zumindest teilweise als erhabene Körper aufgebracht, die die LED-Chips eng umgeben.

Ferner ist es bereits vorgeschlagen worden, LED-Lampen mit parabelförmige Reflektoren zu verwenden, wozu beispielhaft auf die DE 10 2004 007 812 A1 zu verweisen ist.

Ferner ist firmenintern bereits vorgeschlagen worden, vergrößerte Reflektoren einzusetzen, die gemeinsam aus einem massiven Körper aufgebaut sind, wobei die Einzel-Reflektoren miteinander verschnitten sind. Überraschend ist die Lichtabgabe bei einer derartigen Lösung jedoch vergleichsweise wenig befriedigend, so dass diese Lösung nicht weiter verfolgt wurde.

Gerade bei Lichthärtgeräten für Dentalzwecke ist es jedoch entscheidend, dass die Lichtabgabe ausreichend und innerhalb der Spezifikationen ist. Eine unzureichende Lichtabgabe kann dazu führen, dass das zu polymerisierende Dentalmaterial nicht vollständig durchgehärtet ist, was nicht nur dazu führt, dass freie Radikale verbleiben, sondern insbesondere auch dazu, dass das Restaurationsergebnis insgesamt nicht ausreichend ist, was regelmäßig zu Reklamationen führt.

Die US2005231983A1, worauf die zweiteilige Form des Anspruchs 1 basiert, offenbart ein Verfahren und eine Vorrichtung zur Verwendung von Licht emittierenden Dioden zum Härten und für verschiedene Festkörperlichtanwendungen, wobei die Licht emittierenden Dioden zu deren Kühlung auf einer Wärmepumpe derart befestigt sind, dass ultragroße Leistung in Ultraviolett-, sichtbaren und Infrarot-Bereichen ausgegeben wird.

Die US2004149998A1 offenbart ein Beleuchtungssystem mit einer Vielzahl von Strahlung erzeugenden Quellen, wie beispielsweise LED-Quader, wobei eine entsprechende Vielzahl von optischen Wellenleiter in optischem Kontakt mit entsprechenden LED-Quadern sind.

Die US669225081 B1 offenbart eine Vorrichtung zur Lichtaktivierung lichtempfindlicher Komposite, die insbesondere auf dem Gebiet der Dentaltechnik verwendet werden.

Die US 2001/0046652A1 offenbart LED-Lichtquellen zum dentalen Härten, insbesondere mittels LED-Arrays, Wärmesenken, Wärmedissipation, Wärmerohre und einer Steuerungsschaltung.

Die US 2002/0187455A1 offenbart eine Hand gehaltene Vorrichtung zum Härten eines lichtempfindlichen Zahnkomposites, das mittels Bestrahlung mit Licht vorbestimmter Wellenlänge härtbar ist.

Die US 7,300,175 B2 offenbart eine Beleuchtungsvorrichtung mit blauen und roten LEDs, einen Licht aufwärts positionierten Reflektor, einen Bandpassfilter, eine Phosphorschicht und eine Bündelungseinrichtung.

Demgegenüber liegt der Erfindung die Aufgabe zur Grunde, ein Lichthärtgerät für Dentalzwecke gemäß dem Oberbegriff von Anspruch 1 zu schaffen, das mehrere Chips aufweist, die getrennt oder zusammen ansteuerbar sind, wobei die Lichtabgabe im Vergleich zu den bislang bekannten Mehrfachanordnungen von LED-Chips verbessert ist.

Diese Aufgabe wird erfindungsgemäß durch Anspruch 1 gelöst. Vorteilhafte Weiterbildungen ergeben sich aus den Unteransprüchen.

Erfindungsgemäß ist die Lichtabgabe des erfindungsgemäßen Lichthärtgeräts gerade auch bei hoher Leistung verbessert. Erfindungsgemäß kann nämlich eine hochwertige und für alle Chips gemeinsame Optik eingesetzt werden, und deren Lichtabgabe liegt überraschend nahe am theoretischen Maximum.

Offenbar wirkt sich erfindungsgemäß die thermische Entkopplung der einzelnen Reflektorkörper so aus, dass diese nicht von ihrer vorgegeben optischen Achse abweichen. Dies erlaubt es, hochverspiegelte Metall- oder Kunststoffkörper als Reflektorkörper einzusetzen, deren Wärmeausdehnungskoeffizient an sich vergleichsweise groß ist, aber dennoch eine Achsentreue des Reflektors erlaubt. Offenbar verformen sich die innen parabolischen Reflektorkörper dann symmetrisch, ohne dass die LED-Chips den Brennpunkt verlassen, und es entsteht auch kein Achsenfehler wie bei den vorbekannten Lösungen, bei denen die Reflektoren durch die thermische Belastung, also die Ausdehnung, gleichsam nach außen wandern.

In erfindungsgemäßer besonders günstiger Weise ist es dementsprechend vorgesehen, dass die benachbarten Reflektorkörper durch einen Spalt je voneinander getrennt sind, wobei der Spalt sich bevorzugt in gleicher Breite über die gesamte Trennfuge zwischen den benachbarten Reflektorkörpern erstreckt. Es versteht sich, dass ein Reflektorkörper metallisch ausgebildet sein kann, wobei er dann zugleich als eine gewisse Kühlfunktion für die abgegebene Wärme hat, oder auch aus Kunststoff mit einer entsprechenden Innenverspiegelung bestehen kann.

Die Spalte verlaufen bevorzugt gerade, zumindest, so weit einander benachbarte Reflektoren betroffen sind, und tangential zum je zugehörigen Reflektorkegel des Reflektorkörpers. Hier sei unter Reflektorkegel ein beliebiger geeignet geformter und für die Lichtabgabe und optimierter Körper zu verstehen, auch wenn dieser lediglich im Wesentlichen kegelförmig, also beispielsweise parabolisch, ausgebildet ist.

Zur Verbesserung der Wärmeableitung gerade auch bei Wechselbetrieb der LED-Chips, die auch unterschiedliche Wellenlängen emittieren können, ist es möglich, die Reflektorkörper, gerade wenn sie metallisch ausgebildet sind, über das Substrat miteinander mechanisch und insbesondere aber auch thermisch zu verbinden.

Hierzu ist eine großflächige Auflage des Reflektorkörpers bevorzugt, der bevorzugt eine erhebliche Wandstärke von beispielsweise 1/4 des Durchmessers der Lichtaustrittsfläche jedes Reflektorkörpers betragen kann. Es versteht sich, dass die Wandstärke der Einzel-Reflektorkörper je in weiten Bereichen an die Erfordernisse anpassbar ist. Beispielsweise kann auch eine Wandstärke von 1/3 oder 1/5 oder 1/6 der Lichtemissionsfläche des Einzel-Reflektorkörpers gewählt werden.

Es versteht sich, dass die Einzel-Reflektorkörper an ihrem freiliegenden Außenumfang bei Bedarf auch mit Wärmableitmitteln versehen sein können, beispielsweise mit Kühlrippen oder durch Kontakt mit einem großflächigen Wärmeableitkörper.

Erfindungsgemäß ist es besonders günstig, wenn die einzelnen Reflektorkörper - ggf. abgesehen von den unmittelbar den LED-Chips umgebenen Bereich - thermisch voneinander getrennt und entkoppelt sind, und zwar dergestalt, dass auch bei entsprechender Ausdehnung keine Anlage der einzelnen Reflektorkörper aneinander entsteht.

Erfindungsgemäß besonders günstig ist es, wenn die Reflektorkörper mindestens im kalten Zustand durch einen Spalt voneinander getrennt sind.

Erfindungsgemäß besonders günstig ist es, wenn jeder Reflektorkörper insbesondere metallisch ausgebildet ist und insbesondere eine im Wesentlichen gleichförmige Wandstärke hat.

Erfindungsgemäß besonders günstig ist es, wenn jeder Reflektorkörper einen Reflektorkegel aufweist, der im Wesentlichen insbesondere innen stumpf-parabolisch ausgebildet ist und dass die lichtaustrittsseitigen Öffnungen der Reflektorkörper in einer Ebene liegen und insbesondere die LED-Chips je im Brennpunkt der Parabeln angeordnet sind.

Erfindungsgemäß besonders günstig ist es, wenn jeder Reflektorkörper mit dem Substrat formschlüssig verbunden ist und insbesondere an einem der Lichtaustrittsrichtung gegenüberliegenden Endbereich mindestens einen Vorsprung aufweist, der in eine Vertiefung oder Durchbrechung des Substrats eingreift.

Erfindungsgemäß besonders günstig ist es, wenn an den Einzelreflektoren je mindestens ein Vorsprung ausgebildet ist, der von der Außenfläche des Reflektors ausgehend nach außen weist und insbesondere die Reflektorkörper abragende, die Kühloberfläche des Reflektorkörpers vergrößernde Vorsprünge bzw. Rippen vorgesehen sind.

Erfindungsgemäß besonders günstig ist es, wenn die Einzelreflektoren durch eine spaltfreie und enge Auflage auf dem Substrat über das Substrat thermisch miteinander verbunden sind.

Erfindungsgemäß besonders günstig ist es, wenn am lichtaustrittseitigen Öffnungsbereich von wenigstens einem Reflektorkörper eine den Reflektorkörper abdeckende Sammellinse oder transparente Abdeckscheibe angeordnet ist.

Erfindungsgemäß besonders günstig ist es, wenn die Halbleiter-Lichtquellen an dem vorderen Ende eines handgeführten Lichthärtgeräts angeordnet sind.

Erfindungsgemäß besonders günstig ist es, wenn in Lichtaustrittsrichtung nach den Halbleiter-Lichtquellen ein Lichtleitelement insbesondere in Form eines Lichtleitstabes angeordnet ist.

Erfindungsgemäß besonders günstig ist es, wenn die Halbleiter-Lichtquellen Licht mit einer Wellenlänge von 350 bis 480 nm emittieren, und dass insbesondere mindestens zwei aneinander benachbarte Lichtquellen Licht unterschiedlicher Wellenlänge emittieren.

Erfindungsgemäß besonders günstig ist es, wenn einander benachbarte Reflektorkörper nicht miteinander verschnitten sind und die Wandstärke der Reflektorkörper an zum benachbarten Reflektorkörper hin an der oberen Abschlussfläche gegenüber der Wandstärke im Übrigen auf mindestens die Hälfte, insbesondere auf weniger als 1/10 reduziert ist.

Erfindungsgemäß besonders günstig ist es, wenn jeder der Reflektorkörper über mindestens die Hälfte seines Umfangs eine gleichförmige Wandstärke aufweist, die insbesondere mindestens 1/8, bevorzugt etwa 1/4 des Lichtaustrittsdurchmessers des Reflektorskörpers beträgt.

Erfindungsgemäß besonders günstig ist es, wenn mindestens zwei und höchstens fünf, insbesondere höchstens vier, Reflektorkörper aneinander benachbart auf einem gemeinsamen Substrat angeordnet sind, insbesondere drei Reflektorkörper.

Erfindungsgemäß besonders günstig ist es, wenn der Spalt zwischen den Reflektorkörpern in kaltem Zustand eine Breite aufweist, die so berechnet ist, dass der Reflektorkörper sich bei Überführung vom kalten in den heißen Zustand höchstens um die Hälfte der Breite des Spalts in den Spalt hineinerstreckt.

Weitere Vorteile, Einzelheiten und Merkmale ergeben sich aus der nachfolgenden Beschreibung einer Ausführungsform der Erfindung anhand der Zeichnung.

Es zeigen:

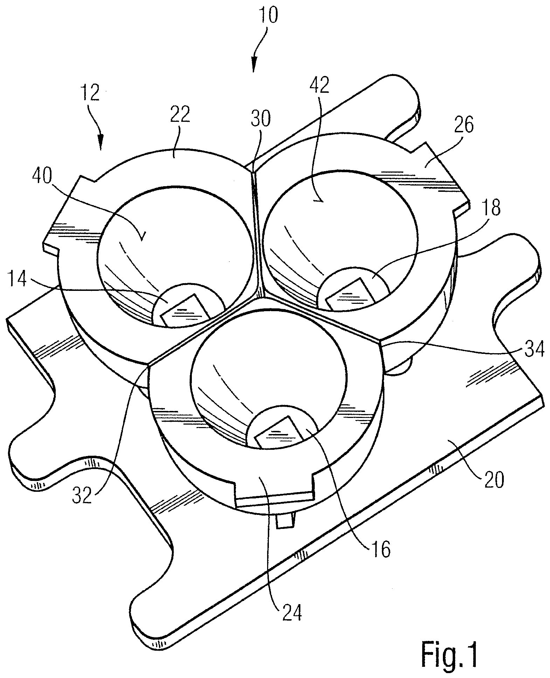

- Fig. 1: eine schematische perspektivische Ansicht der Lichtquelle einer Ausführungsform eines erfindungsgemäßen Lichthärtgeräts für Dentalzwecke;
- Fig. 2: eine weitere perspektivische Ansicht der Ausführungsform gemäß Fig. 1; und
- Fig. 3: eine Ansicht der Ausführungsform gemäß Fig. 1, jedoch schräg von unten.

Ein erfindungsgemäßes Lichthärtgerät 10 weist eine Lichtquelle 12 auf, die in dem dargestellten Ausführungsbeispiel eine Mehrzahl von Halbleiter-Lichtquellen umfasst. Hierzu gehören die drei lichtemittierenden Chips 14, 16 und 18, die auf einem gemeinsamen und die chipskühlenden Substrat 20 angebracht sind.

Jeder Chip ist von einem Reflektorkörper umgeben, der Chip 14 von dem Reflektorkörper 22, der Chip 16 von dem Reflektorkörper 24 und der Chip 18 von dem Reflektorkörper 26. Die einzelnen Reflektorkörper 22 bis 26 sind je von dem Substrat 20 getragen und dort auch befestigt.

Mindestens oberhalb der Chips 14, 16 und 18 ist zwischen den einzelnen Reflektorkörpern 22 bis 26 je ein Spalt vorgesehen, und zwar der Spalt 30 zwischen den Reflektorkörpern 22 und 26, der Spalt 32 zwischen den Reflektorkörpern 22 und 24 und der Spalt 34 zwischen den Reflektrokörpern 24 und 26. Dieser Spalt weist eine erfindungsgemäße Breite auf, die so gewählt ist, dass auch bei Ausdehnung der Einzel-Reflektorkörpern 22 bis 26 die betreffenden Spalte 30 bis 34 nicht überbrückt werden, so dass die Reflektorkörper 22 bis 26 stets mechanisch getrennt sind, ohne in einer Anlage ineinander zu geraten.

Es versteht sich, dass hierzu die Befestigung der Einzel-Reflektorkörper 22 bis 26 auf dem Substrat 20 ausreichend formstabil und fest gewählt ist, dass auch nicht durch Erschütterungen oder dergleichen einer Anlage entsteht, die die Spalte überbrücken würde.

Wenn ein LED-Chips 14 bis 18 beispielsweise eine Kantenlänge von 5 mm aufweist, kann jeder Spalt 30 bis 34 im kalten Zustand eine Größe von beispielsweise 0,5 mm aufweisen, wobei es sich versteht, dass die erforderliche Spaltbreite entweder durch Berechnung oder durch Versuche ermittelt werden kann.

Erfindungsgemäß ist es vorgesehen, die Reflektorkörper 22 bis 26 recht dick zu machen. Beispielsweise kann die Wandstärke der Reflektorkörper je etwa 4 mm betragen, wobei auch hier eine Anpassung an die Erfordernisse in weiten Bereichen möglich ist.

Erfindungsgemäß ist die Wandstärke der Reflektorkörper zur Bereitstellung der Spalte 30 bis 34 in den benachbarten Bereichen der Reflektorkörper 22 bis 26 zueinander je deutlich reduziert, gerade im oberen Bereich, also im Bereich der Lichtaustrittsfläche 40 der einzelnen Reflektorkörper 22 bis 26. Dort kann die Wandstärke beispielsweise auf Spaltbreite oder sogar auf die halbe Spaltbreite reduziert sein, wobei es erfindungsgemäß bevorzugt ist, dass die einzelnen Reflektoren nicht miteinander verschnitten sind.

Dementsprechend weist jeder Reflektorkörper 22 bis 26 bevorzugt eine parabelstumpfförmige Innenfläche 42 auf, wobei im dargestellten Ausführungsbeispiel die LED-Chips 14 bis 18 je im Brennpunkt der Parabel-Innenfläche 42 angeordnet sind.

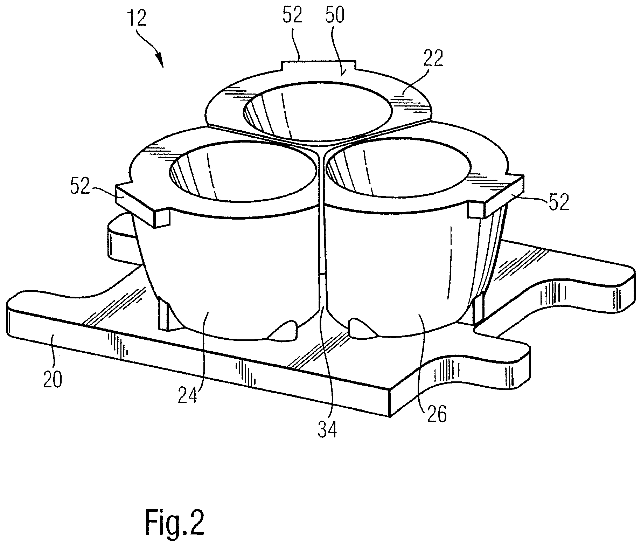

Aus Fig. 2 ist ersichtlich, dass der Spalt 34 zwischen den benachbarten Reflektorkörpern 24 und 26 bis zum Substrat 20, also bis vollständig nach unten hin durchgezogen ist. Die dritte Spalt ist sowohl über die Breite als auch die Höhe betrachtet je gleichförmig, so dass jeder LED-Chip 14 bis 18 unabhängig von der Bewegung der Reflektorkörper 22, 24 und 26 je an der vorgegebenen Stelle verbleibt.

Auch wenn das Substrat 20 hier vergleichsweise dünn und wenig massiv dargestellt ist, versteht es sich, dass in der Praxis eine erhebliche thermische Belastung auch dort vorliegt. Dementsprechend ist der Wärmeableitwiderstand des Substrats 20 in der Praxis gering, was durch entsprechende, hier nicht dargestellte Kühlmittel sichergestellt ist.

Dies ist besonders erfindungsgemäß dann wichtig, wenn auf Grund einer besonderen Optik, die vor den Reflektorkörpern 22 bis 26 angebracht ist, auch die axiale Position der LED-Chips nicht verändert werden sollte, also nicht nur eine "Verbiegung" der einzelnen Reflektorkörpern verhindert werden muss.

Bevorzugt sind die Lichtaustrittsflächen 40 oder lichtaustrittseitlichen Öffnungen der Reflektorkörper in einer Ebene, wie es besonders aus Fig. 2 gut ersichtlich ist. Diese Ebene kann eine Auflagefläche 50 entweder für Einzel-Sammellinsen oder für eine gemeinsame Sammellinse für die Lichtquelle 12 bilden oder aber für eine ausgefeilte Optik, die die Lichtemissionen bündelt und so fokussiert, wie es für den vorgegebenen Anwendungszweck, nämlich die Lichthärtung von Dentalmaterialien, besonders günstig ist.

Es versteht sich, dass anstelle der Sammellinse oder zusätzlich zu dieser eine transparente Abdeckscheibe vorgesehen sein kann, die auch der thermischen Trennung zwischen der Sammellinse und Reflektoren dient und insofern die Verformung der Optik durch Erwärmung der Reflektorkörper verhindert.

Erfindungsgemäß kann die Lichtquelle 12 sowohl am vorderen Ende eines handgeführten Lichthärtgeräts als auch in dessen Basis angeordnet sein, wobei im zweiten Fall bevorzugt sich ein Lichtleitstab vor der Lichtquelle 12 erstreckt.

Für die mechanische Befestigung der Lichtquelle 12 können bevorzugt Vorsprünge 52, 54 und 56 vorgesehen sein, die außen/vorne an jedem Einzel-Reflektor 22 bis 26 ausgebildet sein können und nach außen weisen und insbesondere die vorstehend genannt Ebene nicht übersteigen. An dieser Stelle ist der Reflektorkörper 22 bis 26 je vergleichsweise kühl, nachdem die Wärme schwerpunktmäßig an der Basis des Reflektorkörpers 22 bis 26 eingeleitet wird. Die Aufnahme dort ist insofern auch ohne konstruktiv anspruchsvolle thermische Dämmungsmaßnahmen möglich.

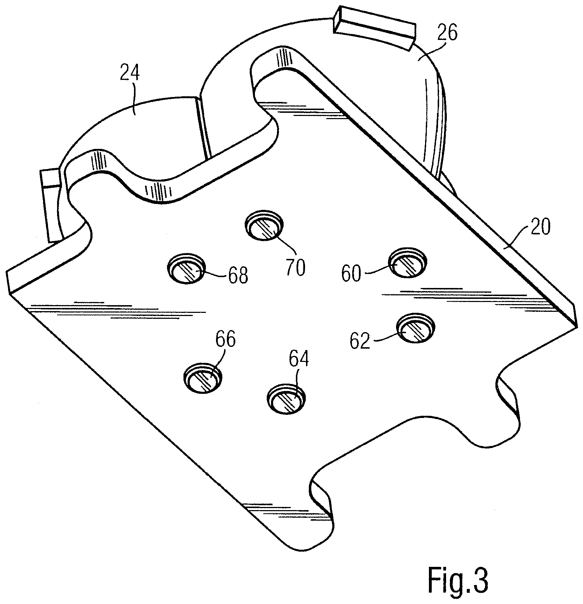

Aus Fig. 3 ist ersichtlich, dass die Reflektorkörper 22 bis 26 je nach unten weisende Vorsprünge 60, 62, 64, 66, 68 und 70 aufweisen, also jeder Reflektorkörper 22, 24, und 26 je zwei, die das Substrat 20 durchbrechen und für eine formschlüssige Verankerung sorgen. In diesem Zusammenhang ist es besonders günstig, wenn die Verbindungslinie zwischen zwei Vorsprüngen eines Reflektorkörpers, also beispielsweise der Vorsprünge 60 und 70 des Reflektorkörpers 26, sich unterhalb des betreffenden LED-Chips des Reflektors befindet, so dass insofern eine symmetrische Führung bei einer etwaigen Wärmeausdehnung des Substrats 20 gewährleistet ist.

## Patentansprüche

1. Lichthärtgerät für Dentalzwecke, mit einer Mehrzahl von Halbleiter-Lichtquellen, die je einen lichtemittierenden Chip aufweisen, welche Chips auf einem gemeinsamen, insbesondere Wärme ableitenden Substrat angebracht sind, wobei jeder Chip von einem einzelnen Reflektorkörper (22, 24 und 26) umgeben ist, der in Verbindung mit dem Substrat (20) und/oder dem zugehörigen Chip steht, und wenigstens zwei Reflektorkörper (22, 24 und 26) nebeneinander angeordnet, nicht aber miteinander verbunden sind, wobei die Reflektorkörper (22, 24 und 26) mindestens im kalten Zustand durch einen Spalt (30, 32, 34) voneinander getrennt sind, **dadurch gekennzeichnet, dass** Wandstärken der Reflektorkörper (22, 24 und 26) zur Bereitstellung der Spalte (30, 32 34) in den benachbarten Bereichen der Reflektorkörper (22, 24, 26) zueinander reduziert sind.

2. Lichthärtgerät nach Anspruch 1, **dadurch gekennzeichnet, dass** jeder Reflektorkörper (22, 24 und 26) metallisch ausgebildet ist.

3. Lichthärtgerät nach einem der vorhergehenden Ansprüche, **dadurch gekennzeichnet, dass** jeder Reflektorkörper (22, 24 und 26) einen Reflektorkegel aufweist, der innen stumpf-parabolisch ausgebildet ist und dass die lichtaustrittsseitigen Öffnungen der Reflektorkörper (22, 24 und 26) in einer Ebene liegen.

4. Lichthärtgerät nach einem der vorhergehenden Ansprüche, **dadurch gekennzeichnet, dass** jeder Reflektorkörper (22, 24 und 26) mit dem Substrat (20) formschlüssig verbunden ist und an einem der Lichtaustrittsrichtung gegenüberliegenden Endbereich mindestens einen Vorsprung (60 bis 70) aufweist, der in eine Vertiefung oder Durchbrechung des Substrats eingreift.

5. Lichthärtgerät nach einem der vorhergehenden Ansprüche, **dadurch gekennzeichnet, dass** von der Außenfläche der Reflektorkörper (22, 24 und 26) abragende, die Kühloberfläche des Reflektorkörpers (22, 24 und 26) vergrößernde Vorsprünge (52) oder Rippen vorgesehen sind.

6. Lichthärtgerät nach einem der vorhergehenden Ansprüche, **dadurch gekennzeichnet, dass** die Einzelreflektoren durch eine spaltfreie und enge Auflage auf dem Substrat (20) über das Substrat (20) thermisch miteinander verbunden sind.

7. Lichthärtgerät nach einem der vorhergehenden Ansprüche, **dadurch gekennzeichnet, dass** am lichtaustrittseitigen Öffnungsbereich von wenigstens einem Reflektorkörper (22, 24 und 26) eine Sammellinse oder transparente Abdeckscheibe angeordnet ist.

8. Lichthärtgerät nach einem der vorhergehenden Ansprüche, **dadurch gekennzeichnet, dass** die Halbleiter-Lichtquellen (12) an dem vorderen Ende eines handgeführten Lichthärtgeräts (10) angeordnet sind.

9. Lichthärtgerät nach einem der Ansprüche 1 bis 7, **dadurch gekennzeichnet, dass** in Lichtaustrittsrichtung nach den Halbleiter-Lichtquellen (12) ein Lichtleitelement angeordnet ist.

10. Lichthärtgerät nach Anspruch 9, **dadurch gekennzeichnet, dass** das Lichtleitelement in Form eines Lichtleitstabes ausgebildet ist.

11. Lichthärtgerät nach einem der vorgehenden Ansprüche, **dadurch gekennzeichnet, dass** die Halbleiter-Lichtquellen (12) Licht mit einer Wellenlänge von 350 bis 480 nm emittieren.

12. Lichthärtgerät nach Anspruch 11, **dadurch gekennzeichnet, dass** mindestens zwei aneinander benachbarte Lichtquellen (12) Licht unterschiedlicher Wellenlänge emittieren.

13. Lichthärtgerät nach einem der vorgehenden Ansprüche, **dadurch gekennzeichnet, dass** mindestens zwei und höchstens fünf Reflektorkörper (22, 24 und 26) aneinander benachbart auf einem gemeinsamen Substrat (20) angeordnet sind.

## Claims

1. A light curing device for dental purposes having a plurality of semiconductor light sources that each comprise a light-emitting chip, wherein said chips are mounted on a common substrate that, in particular, dissipates heat, wherein every chip is surrounded by a single reflector body (22, 24 and 26) which Is connected to the substrate (20) and/or the associated chip, and wherein at least two reflector bodies (22, 24 and 26) are disposed next to one another but are not connected with one another, wherein the reflector bodies (22, 24 and 26) are separated from one another by a gap (30, 32, 34) at least in the cold state, **characterized in that** the wall thicknesses of the reflector bodies (22, 24 and 26) are reduced relative to one another for providing the gap (30, 32, 34) In the adjacent regions of the reflector bodies (22, 24, 26).

2. The light curing device as claimed in claim 1, **characterized in that** each reflector body (22, 24 and 26) is of metallic construction.

3. The light curing device as claimed in one of the preceding claims, **characterized In that** each reflector body (22, 24 and 26) comprises a reflector cone that has an obtuse parabolic inner shape, and that the openings of the reflector bodies (22, 24 and 26) on the light-emitting side are located in one plane.

4. The light curing device as claimed in one of the preceding claims, **characterized In that** each reflector body (22, 24 and 26) is connected with the substrate (20) in a positive-locking manner, and comprises at least one protrusion (60 to 70) at an end region opposite to the light exit direction, said protrusion engaging into a recess or opening of the substrate.

5. The light curing device as claimed in one of the preceding claims, **characterized In that** protrusions (52) or fins are provided that protrude from the outer surface of the reflector bodies (22, 24 and 26) and increase the cooling surface of the reflector body (22, 24 and 26).

6. The light curing device as claimed in one of the preceding claims, **characterized In that** the individual reflectors are thermally connected to one another through a gap-free and tight fit or rest on the substrate (20) via the substrate (20).

7. The light curing device as claimed in one of the preceding claims, **characterized in that** a collecting lens or a transparent cover disk is arranged on the light exit-sided opening region of at least one reflector body (22, 24 and 26).

8. The light curing device as claimed in one of the preceding claims, **characterized in that** the semiconductor light sources (12) are arranged at the front end of a hand-held light curing device (10).

9. The light curing device as claimed in one of the claims 1 to 7, **characterized in that** a light-conducting element is arranged in the light exit direction after the semiconductor light sources (12).

10. The light curing device as claimed in claim 9, **characterized in that** the light-conducting element is configured in the form of a light-conducting rod.

11. The light curing device as claimed in one of the preceding claims, **characterized in that** the semiconductor light sources (12) emit light at a wavelength of 350 to 480 nm.

12. The light curing device as claimed in claim 11, **characterized in that** at least two adjacent light sources (12) emit light of different wavelengths.

13. The light curing device as claimed in one of the preceding claims, **characterized in that** at least two and at most five reflector bodies (22, 24 and 26) are arranged adjacent to one another on a common substrate (20).

## Revendications

1. Dispositif de photopolymérisation à usage dentaire, avec une pluralité de sources lumineuses à semi-conducteurs, dont chacune présente une puce émettrice de lumière, lesdites puces étant montées sur un substrat commun en particulier à dissipation de chaleur, où chaque puce est entouré d'un corps réflecteur (22, 24 et 26) individuel, qui est en contact avec le substrat (20) et/ou la puce correspondante, et au moins deux corps réflecteurs (22, 24 et 26) sont montés côte à côte, mais pas reliés entre eux, où les corps réflecteurs (22, 24 et 26) au moins à l'état froid sont séparés les uns des autres par une fente (30, 32, 34) **caractérisé en ce que** des épaisseurs de paroi des corps réflecteurs (22, 24 et 26) sont réduites les unes aux autres pour fournir la fente (30, 32 à 34) dans les zones voisines du corps réflecteur (22, 24, 26).

2. Dispositif de photopolymérisation selon la revendication 1, **caractérisé en ce que** chaque corps réflecteur (22, 24 et 26) est formé en métal.

3. Dispositif de photopolymérisation selon l'une des revendications précédentes, **caractérisé en ce que** chaque corps réflecteur (22, 24 et 26) présente un réflecteur conique, qui est formé à l'intérieur émoussé-parabolique et que les ouvertures latérales de sortie de lumière des corps réflecteurs (22, 24 et 26) sont situés dans un même plan.

4. Dispositif de photopolymérisation selon l'une des revendications précédentes, **caractérisé en ce que** chaque corps réflecteur (22, 24 et 26) est connecté par engagement positif avec le substrat (20) et présente au moins une saillie (60 à 70) sur une zone d'extrémité en face du sens de la sortie de la lumière, qui s'engage dans un creux ou une rupture du substrat.

5. Dispositif de photopolymérisation selon l'une des revendications précédentes, **caractérisé en ce que** à partir de la surface extérieure du corps réflecteur (22, 24 et 26) des protubérances (52) ou des côtes sont fournies qui font saillie et agrandissent la surface de refroidissement du corps réflecteur (22, 24 et 26).

6. Dispositif de photopolymérisation périphérique selon l'une des revendications précédentes, **caractérisé en ce que** les réflecteurs individuels sont thermiquement connectés entre eux par le substrat (20) à travers une pose étanche et étroite sur le substrat (20).

7. Dispositif de photopolymérisation selon l'une des revendications précédentes, **caractérisé en ce qu'**une lentille convexe ou verre de recouvrement transparent est disposé du côté de la sortie de lumière de la zone d'ouverture d'au moins un corps réflecteur (22, 24 et 26).

8. Dispositif de photopolymérisation selon l'une des revendications précédentes, **caractérisé en ce que** les sources lumineuses à semi-conducteurs (12) sont disposées à l'extrémité avant d'un dispositif de photopolymérisation (10) manuel.

9. Dispositif de photopolymérisation selon l'une des revendications 1 à 7, **caractérisé en ce qu'**un élément de guidage de la lumière est arrangé après la source lumineuse à semi-conducteurs (12) en direction de la sortie de lumière.

10. Dispositif de photopolymérisation selon la revendication 9, **caractérisé en ce que** l'élément de guidage de la lumière est configuré sous la forme d'une tige de guidage de la lumière.

11. Dispositif de photopolymérisation selon l'une des revendications précédentes, **caractérisé en ce que** les sources lumineuses à semi-conducteurs (12) émettent à une longueur d'onde de 350 à 480 nm.

12. Dispositif de photopolymérisation selon la revendication 11, **caractérisé en ce qu'**au moins deux sources de lumière (12) avoisinantes les unes des autres émettent de la lumière d'une longueur d'onde différente.

13. Dispositif de photopolymérisation selon l'une des revendications précédentes, **caractérisé en ce qu'**au moins deux et un maximum de cinq Reflektorkörper (22, 24 et 26) sont arrangées avoisinantes les unes des autres sur un substrat commun (20).
